(19) **Europäisches Patentamt / European Patent Office / Office européen des brevets**

(11) **EP 4 778 796 A1**

(12) # EUROPEAN PATENT APPLICATION

(43) Date of publication:
22.07.2026 Bulletin 2026/30

(21) Application number: 26151281.8

(22) Date of filing: 12.01.2026

(51) International Patent Classification (IPC):
*B60W 10/08* (2006.01)   *B60W 30/18* (2012.01)

(52) Cooperative Patent Classification (CPC):
**B60W 30/18172; B60W 10/08; B60W 30/18127;**
B60W 40/064; B60W 2040/1353; B60W 2520/28;
B60W 2552/40; B60W 2710/083; B60W 2720/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 16.01.2025 EP 25152241

(71) Applicant: **Volvo Truck Corporation**
**405 08 Göteborg (SE)**

(72) Inventors:
• **WÖLFINGER, Alexander
MARSTRAND (SE)**
• **GROTH, Björn
GÖTEBORG (SE)**
• **RAY, Sidhant
MÖLNDAL (SE)**

(74) Representative: **Ström & Gulliksson AB**
**P.O. Box 4188**
**203 13 Malmö (SE)**

(54) **REDUCTION OF UNDESIRED ROTATIONAL WHEEL SPEED**

(57)     A computer system (140, 160, 310, 500) for reducing rotational speed of at least one wheel (110) of a vehicle (100), the computer system (140, 160, 310, 500) comprising processing circuitry (150, 170, 315, 502) configured to: determine a first value of rotational kinetic energy ($E_1$) of one or more powertrain components (110, 120, 210, 220, 230, 240, 250, 260, 320) of the vehicle (100), when the at least one wheel (110) is rotating at a current rotational speed ($\omega_1$); acquire a second value of rotational kinetic energy ($E_2$) of the one or more powertrain components (110, 120, 210, 220, 230, 240, 250, 260, 320), when the at least one wheel (110) is rotating at a rotational speed ($\omega_2$) where the wheel (110) has a desired amount of slip; determine an energy difference ($\Delta E$) between the first value of rotational kinetic energy ($E_1$) and the second value of rotational kinetic energy ($E_2$); determine a first retardation torque pulse corresponding to the determined energy difference ($\Delta E$); and cause the determined first retardation torque pulse to be applied to at least one of the one or more powertrain components to reduce the rotational speed of the at least one wheel (110).

EP 4 778 796 A1

## Description

### TECHNICAL FIELD

The disclosure relates generally to vehicle motion management. In particular aspects, the disclosure relates to reduction of undesired rotational wheel speed. The disclosure can be applied to heavy-duty vehicles, such as trucks, buses, and construction equipment, among other vehicle types. In particular, the disclosure can be applied in electrical vehicles.

### BACKGROUND

When power is transmitted through a vehicle driveline and the torque applied to a wheel exceeds the traction force between the tyre and the road surface, the wheel will start to spin. This typically happens under conditions of low friction or when excessive power is delivered to the wheels, particularly during acceleration. Wheel spin results in loss of traction, reducing vehicle control and performance. Even if the vehicle has a quick response in the form of torque reduction, the wheels will keep spinning for some time due to the rotational energy of the wheels and driveline of the vehicle. The moment of inertia of these components will resist changes in their speed of rotation and delay the vehicle from regaining control and traction, particularly on low friction surfaces.

It is therefore desired to develop a solution for managing wheel spin that addresses or at least mitigates some of these issues.

### SUMMARY

This disclosure provides systems, methods and other approaches for reducing rotational speed of at least one wheel of a vehicle by determining the rotational kinetic energy of one or more components of a vehicle powertrain, both when the wheel is rotating at a current rotational speed and when the wheel is rotating at a rotational speed where the wheel has a desired amount of slip, for example a sufficiently low amount of slip. The difference in rotational kinetic energy when the wheel rotates at the two different speeds is then used to determine a corresponding retardation torque pulse. The retardation torque pulse is applied to at least one of the one or more powertrain components, such that the rotational speed of the at least one wheel is reduced. In this way, undesired rotational speed of a wheel may be counteracted in an efficient way, and a faster traction control response and reduced wheel spin is achieved.

According to a first aspect of the disclosure, there is provided a computer system for reducing rotational speed of at least one wheel of a vehicle, the computer system comprising processing circuitry configured to: determine a first value of rotational kinetic energy of one or more powertrain components of the vehicle when the at least one wheel is rotating at a current rotational speed; acquire a second value of rotational kinetic energy of the one or more powertrain components when the at least one wheel is rotating at a rotational speed where the wheel has a desired amount of slip; determine an energy difference between the first value of rotational kinetic energy and the second value of rotational kinetic energy; determine a first retardation torque pulse corresponding to the determined energy difference; and cause the determined first retardation torque pulse to be applied to at least one of the one or more powertrain components to reduce the rotational speed of the at least one wheel.

The first aspect of the disclosure may seek to provide a computer system for counteracting undesired rotational speed of a wheel, by determining the rotational kinetic energy caused by the undesired rotational speed and a corresponding retardation torque pulse. The system may then cause the determined retardation torque pulse to be applied to at least one powertrain component, such that the undesired rotational speed of the wheel is reduced. A technical benefit may include a faster traction control response and reduced wheel spin.

Optionally in some examples, including in at least one preferred example, the processing circuitry is configured to determine the first value of rotational kinetic energy based on a respective moment of inertia of the one or more powertrain components and a respective current rotational speed of the one or more powertrain components. A technical benefit may include that a robust and consistent way to determine rotational kinetic energy is achieved. As the values of moment of inertia are based on fixed properties of the powertrain components, such as their respective mass and geometry, only their current rotational speed needs to be measured in order to determine the first value of rotational kinetic energy. In this way, the need for complex and costly sensor systems is avoided and system complexity may be reduced.

Optionally in some examples, including in at least one preferred example, the second value of rotational kinetic energy is pre-determined based on a respective moment of inertia of the one or more powertrain components and a respective rotational speed of the one or more powertrain components, when the at least one wheel has a desired amount of slip. A technical benefit may include that faster traction control response is achieved, as the system is enabled to compare the current rotational kinetic energy against a known reference point for achieving a desired amount of slip, thereby reducing the time needed for complex calculations or processing.

Optionally in some examples, including in at least one preferred example, the first retardation torque pulse is a torque applied during a time t in a direction opposite to the direction of rotation of the one or more powertrain components. A technical benefit may include a controlled reduction in wheel speed, which quickly reduces excess rotational energy to regain traction without overcorrecting or causing unnecessary deceleration.

Optionally in some examples, including in at least one preferred example, the processing circuitry is configured to cause the first retardation torque pulse to be applied to at least one electric motor of the vehicle powertrain components. A technical benefit may include that an efficient and durable system for reducing rotational speed of at least one wheel is obtained, as controlling the at least one electric motor to reduce the power provided to the powertrain components enables immediate and precise modulation of torque without relying on mechanical components or introducing extra stress on the other components of the powertrain.

Optionally in some examples, including in at least one preferred example, the processing circuitry is further configured to control the at least one electric motor to convert the retardation torque pulse into electric energy and store the electric energy in a battery of the vehicle. A technical benefit may include that the energy of the retardation torque pulse is recovered, and the overall energy efficiency of the vehicle thereby improved.

Optionally in some examples, including in at least one preferred example, at least two wheels of the vehicle are controlled by one electric motor and the processing circuitry is configured to determine the first value of rotational kinetic energy for a wheel of the at least two wheels rotating with the highest rotational speed and to cause the determined first retardation torque pulse to be applied to the electric motor such that the rotational speed of each of the at least two wheels is reduced. A technical benefit may include that the retardation torque pulse is determined based on the fastest spinning wheel, such that it is assured that the rotational speed of all wheels is sufficiently reduced.

Optionally in some examples, including in at least one preferred example, the first and second value of rotational kinetic energy each further comprises the rotational kinetic energy of one or more of the one electric motor, an input shaft, a gearbox, an output shaft, a differential, and an axle shaft. A technical benefit may include that by including additional powertrain components in the calculations, a more accurate determination of the first and second value of rotational kinetic energy will be achieved, which will enable a more precise determination of the retardation torque pulse required to counteract undesired rotational speed.

Optionally in some examples, including in at least one preferred example, each wheel of the vehicle is controlled by a respective electric wheel motor and the processing circuitry is configured to determine a respective first value of rotational kinetic energy for each wheel, determine a respective energy difference between each first value of rotational kinetic energy and the second value of rotational kinetic energy, determine a respective first retardation torque pulse corresponding to each determined respective energy difference, and to cause a first respective retardation torque pulse to be applied to each respective wheel motor such that the rotational speed of each wheel is reduced individually. A technical benefit may include the provision of more precise traction control, allowing the system to determine a required retardation torque pulse for each wheel independently. In this way, torque is reduced only where necessary, without affecting the performance of other wheels.

Optionally in some examples, including in at least one preferred example, the first and second value of rotational kinetic energy each further comprises the rotational kinetic energy of the corresponding electric wheel motor. A technical benefit may include that, by including the electric wheel motor in the calculations, a more accurate determination of the first and second value of rotational kinetic energy will be achieved which will enable a more precise determination of the retardation torque pulse required to counteract undesired rotational speed.

Optionally in some examples, including in at least one preferred example, the processing circuitry is configured to determine the first retardation torque pulse in response to determining that the current rotational speed is above the rotational speed where the wheel has a desired amount of slip. A technical benefit may include the system the system is triggered to determine the first retardation torque pulse based on a condition, allowing the system to respond precisely when a wheel reaches a speed that indicates loss of traction. This ensures an efficient and targeted response, with improved vehicle stability during dynamic driving conditions.

Optionally in some examples, including in at least one preferred example, the processing circuitry is further configured to determine a second retardation torque pulse to further reduce the wheel speed to the rotational speed where the wheel has the desired amount of slip, in response to determining that the rotational speed of the at least one wheel is above the rotational speed where the wheel has the desired amount of slip after the first retardation torque pulse has been applied. A technical benefit may include that a system which continuously monitors the rotational speed of the wheel is provided, allowing the retardation torque applied to be incrementally increased. In this way, the system prevents over-braking while effectively managing persistent wheel spin if the first retardation torque pulse was not sufficient to regain traction.

According to a second aspect of the disclosure, there is provided a vehicle comprising the computer system of any preceding claim. The second aspect of the disclosure may seek to provide a vehicle capable of determining the energy required to counteract undesired rotational speed of at least one wheel of the vehicle and applying a corresponding retardation torque pulse to at least one powertrain component. Thereby, the undesired rotational speed of the at least one wheel is reduced. A technical benefit may include a vehicle with faster traction control response and reduced wheel spin, and thus increased safety and stability.

According to a third aspect of the disclosure, there is provided a computer-implemented method for reducing rotational speed of at least one wheel of a vehicle, the method comprising: determining, by processing circuitry of a computer system, a first value of rotational kinetic energy of one or more powertrain components, of the vehicle when the at least one wheel is rotating at a current rotational speed; acquiring, by the processing circuitry, a second value of rotational kinetic energy of the one or more powertrain components, when the at least one wheel is rotating at a rotational speed where the wheel has a desired amount of slip; determining, by the processing circuitry, an energy difference between the first value of rotational kinetic energy and the second value of rotational kinetic energy; determining, by the processing circuitry a first retardation torque pulse corresponding to the determined energy difference; and causing, by the processing circuitry, the determined first retardation torque pulse to be applied to at least one of the one or more powertrain components to reduce the rotational speed of the at least one wheel.

The third aspect of the disclosure may seek to provide a computer-implemented method for determining the energy required to counteract undesired rotational speed of at least one wheel of a vehicle and applying a retardation torque pulse corresponding to the determined energy to at least one powertrain component of the vehicle. Thereby, the undesired rotational speed of the at least one wheel is reduced in an efficient way. A technical benefit may include a faster traction control response and reduced wheel spin.

According to a fourth aspect of the disclosure, there is provided a computer program product comprising program code for performing, when executed by the processing circuitry, the computer-implemented method. The fourth aspect of the disclosure may seek to enable new vehicles and/or legacy vehicles to be conveniently configured, by software installation/update, to determine the energy required to counteract undesired rotational speed of at least one wheel of the vehicle and apply a corresponding retardation torque pulse to at least one powertrain component of the vehicle. A technical benefit may include a faster traction control response and reduced wheel spin.

According to a fifth aspect of the disclosure, there is provided a non-transitory computer-readable storage medium comprising instructions, which when executed by the processing circuitry, cause the processing circuitry to perform the computer-implemented method. The fifth aspect of the disclosure may seek to enable new vehicles and/or legacy vehicles to be conveniently configured, by software installation/update, to determine the energy required to counteract undesired rotational speed of at least one wheel of the vehicle and apply a corresponding retardation torque pulse to at least one powertrain component of the vehicle. A technical benefit may include a faster traction control response and reduced wheel spin.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically shows a side view of a vehicle according to an example.
FIG. 2 schematically shows a powertrain of a vehicle according to an example.
FIG. 3 schematically shows a powertrain of a vehicle according to a second example.
FIG. 4 is a flow chart of a computer-implemented method according to an example.
FIG. 5 is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

Wheel spin occurs when the torque applied to a vehicle wheel exceeds the available traction. Wheel spin may lead to loss of vehicle control, reduced vehicle stability, and increased tyre wear. Therefore, when wheel spin occurs, it is important to regain traction as quickly as possible. However, even if the vehicle has a quick response in torque reduction, the wheels will keep spinning for some time due to the rotational kinetic energy of the components of the vehicle powertrain, which will continue to drive the wheels forward. The wheels will not stop spinning until enough energy to counteract this rotational kinetic energy has been accumulated by tyre friction. On a low friction surface, this may take some time.

To remedy this, systems and methods are proposed for determining the energy required to counteract undesired rotation of a wheel. In particular, systems and methods are proposed for determining a difference between the rotational kinetic energy of one or more powertrain components when the wheel is rotating at a current, undesired rotational speed, and the rotational kinetic energy of the one or more powertrain components when the wheel is rotating at a desired rotational speed. Based on this, a retardation torque pulse can be determined and applied to components of the vehicle powertrain, such that the undesired rotational speed of the wheel is reduced. In this way, faster traction control and reduced wheel spin is achieved in an efficient way.

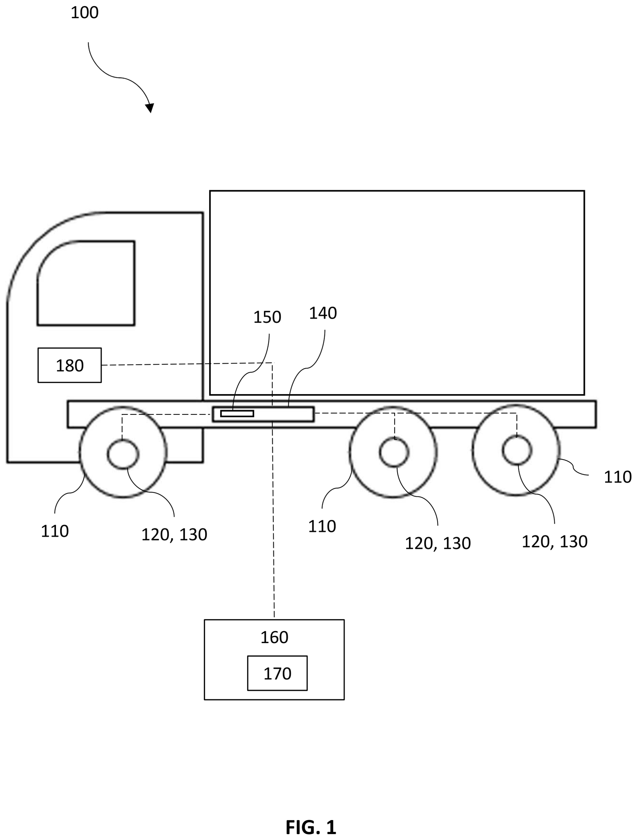

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110**. Whilst three axles are shown, it will be appreciated that any suitable number of axles may be provided. It will also be appreciated that any number of the axles may be driven axles. The vehicle **100** normally comprises a steered axle, or more than one steered axle.

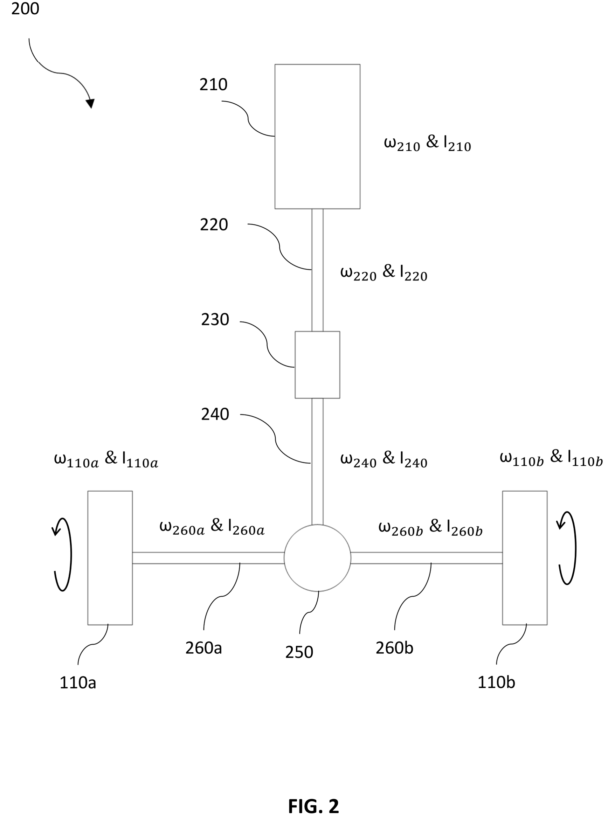

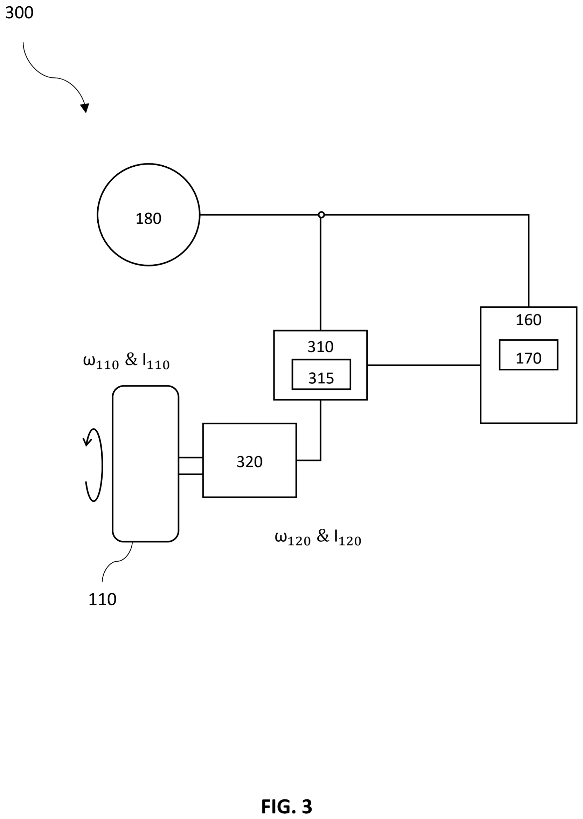

The vehicle **100** may comprise one or more sources of propulsion. For example, the vehicle **100** may comprise one or more electrical machines **120** such as electric motors and/or generators. The vehicle **100** may comprise one or more batteries (not shown) configured to provide power to the electrical machines **120**. In some examples, the vehicle **100** may also include another source of propulsion, for example an internal combustion engine (ICE). The vehicle **100** also comprises a powertrain (not shown) configured to deliver mechanical power from the propulsion source (the electrical machines **120** or the ICE) to the wheels **110**. The vehicle powertrain will be discussed further in relation to **FIGs. 2** and **3.**

The electrical machines **120** are configured to drive, e.g. provide torque and/or steering to, one or more axles or individual wheels **110** of the vehicle **100**. The electrical machines **120** can supply either a positive (propulsion) or negative (braking) force. The use of electrical machines **120** to supply a negative force is known as regenerative braking. When regenerative braking is engaged, the operation of the electrical machine **120** is reversed by a control unit, which causes the electrical machine **120** to operate as a generator. Instead of consuming electrical energy to drive the wheels, the motor converts the kinetic energy of the vehicle into electrical energy, which may be stored in a battery.

Furthermore, the vehicle **100** may comprise one or more sets of service brakes **130**. The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking by the electrical machines **120** may be generally preferred over using the service brakes **130**. The electrical machines **120,** service brakes **130,** and ICE of a vehicle **100** may be referred to as actuators or motion support devices (MSDs) of the vehicle **100.**

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100**. A trailing unit is generally used to store goods that are being transported by the vehicle combination **100**. A trailing unit may be a truck, trailer, dolly and the like. A trailing unit may also provide propulsion to the vehicle combination **100**. In such examples, each unit may comprise its own electrical machines **120,** batteries, service brakes **130,** and the like. In this way, all units may provide propulsion to the vehicle combination **100.**

The vehicle **100** further includes a controller **140** comprising processing circuitry **150**. The controller **140** is configured to control components of the vehicle, for example the electrical machines **120**. **FIG. 1** shows a common controller **140** for all electrical machines **120** of the vehicle **100,** however it will be appreciated that each electrical machine **120** may have its own respective controller. In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a global controller **160** comprising processing circuitry **170**. The global controller **160** may be a vehicle control unit configured to perform various vehicle (unit) control functions, such as vehicle motion management. The global controller **160** may be local to the vehicle **100,** for example implanted in a controller **140,** or may be a remote system, implemented at a distance from the vehicle **100**. The global controller **160** may be communicatively coupled to the controller **140** in any suitable way, for example via a circuit or any other wired, wireless, or network connection known in the art. Furthermore, the communicative coupling may be implemented as a direct connection between the controller **140** and the global controller **160,** or may be implemented as a connection via one or more intermediate entities. One function of the controller **140** and the global controller **160** is to provide control inputs for the vehicle **100,** for example torque, force, or slip requests.

The controllers **140, 160** of the vehicle **100** may further be connected to a sensor system **180** configured to provide input to the controllers **140, 160** relating to real-time operating conditions of the vehicle **100,** such that the controllers **140, 160** may adjust the operation of the vehicle **100** accordingly. The sensor system **180** will be discussed in more detail in relation to **FIG. 3.**

**FIG. 2** schematically shows a powertrain **200** of the vehicle **100** according to a first example. The powertrain **200** comprises an electric motor **210** configured to deliver mechanical power to at least two wheels **110a, 110b** of the vehicle **100.** The powertrain **200** further comprises an input shaft **220,** a gearbox **230,** an output shaft **240,** a differential **250,** and an axle shaft **260** comprising a left half shaft **260a** and a right half shaft **260b,** connecting the electric motor **210** to respective ones of the at least two wheels **110a, 110b.** Depending on whether the vehicle has a front-wheel or rear-wheel drive configuration, the electric motor **210** is configured to deliver power to the wheels on either the front or the rear axle. In all-wheel-drive configurations, the electric motor **210** is configured to deliver power to the wheels on both the front axle shaft and the rear axle.

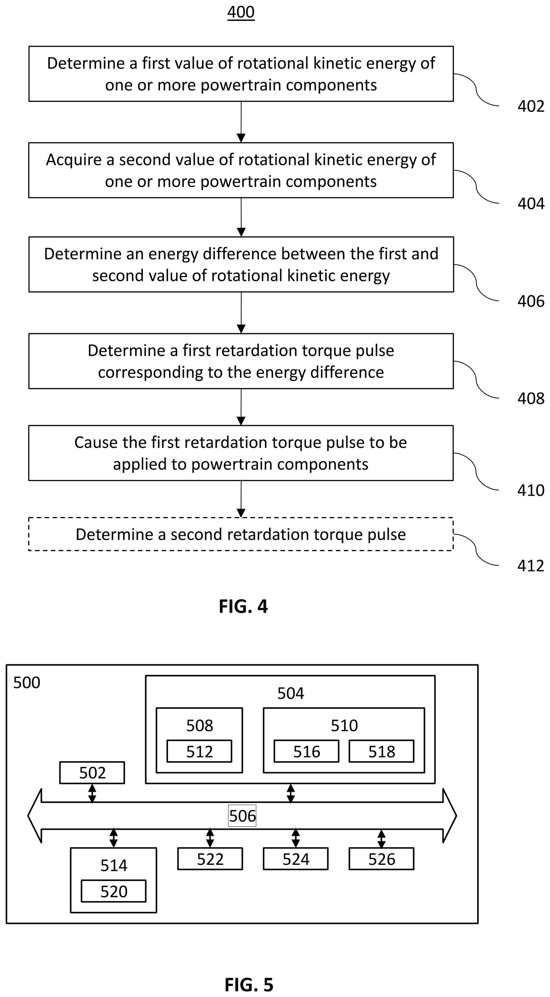

The electric motor **210** may correspond to an electrical machine **120** discussed in relation to **FIG. 1.** It is typically positioned centrally in the vehicle **100** and configured to convert electrical energy stored in a battery into mechanical energy, thereby generating rotational torque. The speed and torque output of the electric motor **210** are controlled by a control unit, for example the controller **140.** When set in motion, the rotational speed of the electric motor **210** is $\omega_{210}$. The moment of inertia of the electric motor **210** is $I_{210}$. The impact of the rotational speed and the moment of inertia of the different powertrain components in reducing undesired rotation speed of the at least one wheel will be discussed below and in relation to **FIG. 4.**

An output of the electric motor **210** is connected to an input of the gearbox **230** through input shaft **220.** In this way, the input shaft **220** is configured to transmit rotational power from the electric motor **210** to the gearbox **230.** When set in motion, the rotational speed of the input shaft **220** is $\omega_{220}$. The moment of inertia of the input shaft **220** is $I_{220}$.

The gearbox **230** comprises a set of gears configured to alter the rotational speed and torque of the input shaft **220** depending on the driving conditions of the vehicle, and to transfer power to an output shaft **240.** The rotational speed of the gearbox **230** is $\omega_{230}$. The moment of inertia of the gearbox **230** is $I_{230}$.

The output shaft **240** is configured to receive the adjusted torque and rotational speed from the gearbox **230,** and to transmit it to the differential **250.** When set in motion, the rotational speed of the output shaft **240** is $\omega_{240}$. The moment of inertia of the output shaft **240** is $I_{240}$.

The differential **250** and the axle shaft **260** provide the final link in the powertrain **200.** The differential **250** is configured to split the power transferred from the output shaft **240** to the left and right half shafts **260a, 260b** of the front and/or rear axles, and enables the half shafts **260a, 260b** to rotate at different speeds. The rotational speed of the differential **250** is $\omega_{250}$. The moment of inertia of the differential **250** is $I_{250}$. The respective rotational speeds of the half shafts **260a, 260b** are $\omega_{260a}$, $\omega_{260b}$. The respective moments of inertia of the half shafts **260a, 260b** are $I_{260a}$, $I_{260b}$.

The half shafts **260a, 260b** then transfer power from the differential **250** to a respective wheel **110a, 110b,** enabling the vehicle to move. When set in motion, the respective rotational speeds of the wheels **110a, 110b** are $\omega_{110a}$, $\omega_{110b}$. The respective moments of inertia of the wheels **110a, 110b** are $I_{110a}$, $I_{110b}$.

Though not shown, the electric motor **210** in the powertrain **200** may be controlled by the controller **140,** which receives control signals from the global controller **160,** as discussed in relation to **FIG. 1.** For example, the controller **140** may receive a torque request from the global controller **160,** whereby the electric motor **210** is controlled to generate power which is then transferred through the components of the powertrain **200** and to the wheels **110a, 110b.**

**FIG. 3** schematically shows a powertrain **300** of the vehicle **100** according to a second example. The powertrain **300** comprises a respective electric wheel motor **320** arranged at each wheel **110,** configured to deliver power to the respective wheel **110.** In **FIG. 3,** only a single wheel **110** is shown, although it will be appreciated that each of multiple wheels **110** of the vehicle **100** may have a respective electric wheel motor **320.** The electric wheel motor **320** of powertrain **300** may correspond to the electrical machine **120** discussed in relation to **FIG. 1.**

The electric wheel motor **320** is attached directly to or integrated into a respective wheel hub and configured to provide propulsion directly to its respective wheel **110.** Therefore, the need for powertrain components configured to transfer power from the motor to the wheels **110,** as discussed in relation to **FIG. 2,** is eliminated. When set in motion, the rotational speed of the respective electric wheel motor **320** is $\omega_{120}$. The moment of inertia of the respective electric wheel motor **320** is $I_{120}$. When set in motion, the rotational speed of the respective wheel **110** is $\omega_{110}$. The moment of inertia of the respective wheel **110** is $I_{110}$.

Each electric wheel motor **320** may be controlled by a respective controller **310,** comprising processing circuitry **315.** The controller **310** may correspond to controller **140** discussed in relation to **FIG. 1** and allows each electric wheel motor **320** to be independently controlled. The independent control enables precise distribution of power to each wheel **110** based on real-time conditions. For example, during a turn, the outer wheels can be given more power than the inner wheels, improving cornering efficiency. The power distribution may also be adjusted for each wheel based on the traction available, such that the power transmitted to a spinning wheel is reduced while maintaining optimal speed of other wheels.

In both **FIG. 2** and **FIG. 3,** the individual control of each electric motor **210, 320** may be coordinated by a centralized control system, for example the global controller **160** comprising processing circuitry **170.** The global controller **160** determines the optimal torque and speed for each electric motor **210, 320,** and may determine a corresponding control signal for each controller **310,** such that performance, stability and manoeuvrability of the vehicle **100** is ensured.

As discussed in relation to **FIG. 1,** the controllers **140, 160, 310** of the vehicle **100** may be connected to a sensor system **180** configured to provide input to the controllers **140, 160, 310** relating to real-time operating conditions of the vehicle **100.** In **FIG. 3,** the sensor system **180** is shown as part of powertrain **300** and connected to controller **310.** Here, the sensor system **180** is configured to provide sensor data relating to the powertrain **300,** for example the current rotational speed $\omega_{1i}$ of the respective wheel **110** and optionally the respective electric wheel motor **320.** In a vehicle **100** comprising a powertrain **200** according to **FIG. 2,** though not shown in **FIG. 2,** the sensor system **180** is connected to controllers **140, 160, 310** and configured to provide sensor data relating to the powertrain **200,** for example the current rotational speed $\omega_{1i}$ of the wheels **110a, 110b** and optionally powertrain components **210, 220, 230, 240, 250, 260.**

When an electric machine **120, 210, 320** of the powertrain **200, 300** is controlled to distribute power to at least one wheel **110** of the vehicle **100,** as discussed above, each component of the powertrain **200, 300** will begin to rotate, and the vehicle **100** will be set in motion. The rotational motion of the powertrain components will cause the components to gain a rotational kinetic energy $E_i$. The rotational kinetic energy $E_i$ of each component depends on the rotational speed $\omega_i$ and the moment of inertia $I_i$ of the respective component $i$, see equation (1).

$$E_i \ = \frac{I_i \omega_i^2}{2} \hspace{4cm} (1)$$

Here, $E_i$ is the rotational kinetic energy, $I_i$ is the moment of inertia, and $\omega_i$ is the rotational speed of component $i$.

Moment of inertia is the tendency of an object to resist changes in its state of rotation. Thus, once the components of the vehicle powertrain **200, 300** are set in motion, their moment of inertia will work to keep them rotating even when the power provided by the electrical machine **120, 210, 320** to the powertrain **200, 300** is reduced or stopped. To slow or stop the rotational motion of the powertrain components, their rotational kinetic energy must be counteracted, either through friction or braking. Especially on low friction surfaces, it will take some time before enough energy has been accumulated through friction to counteract the rotational kinetic energy due to moment of inertia in the powertrain.

Moment of inertia depends on both the mass of the object and how that mass is distributed relative to the axis of rotation. Heavier or more widely distributed mass means the object will have a larger moment of inertia, making it more resistant to changes in its rotational speed. For example, the wheels **110** of the vehicle will have a relatively high moment of inertia $I_{110}$ as they are relatively heavy and have a large radius with the mass distributed around the circumference of the wheel. In comparison, input shaft **220** and output shaft **240,** for example, will have a lower moment of inertia, $I_{220}$ and $I_{240}$, as they have a smaller radius with mass distributed closer to the axis of rotation.

A quick response in reducing undesired rotational motion is particularly important for traction control, in order to maintain vehicle stability and prevent wheel spin. Wheel spin occurs when the power transmitted through a powertrain **200, 300** and the torque applied to the wheels **110** exceeds the traction force between the tyre of the wheel **110** and the road surface. As a result, the wheel **110** will start to spin. Wheel spin results in loss of traction, reducing vehicle control and performance.

To remedy this, systems and methods are proposed for determining and applying the energy required to counteract undesired rotational speed of at least one wheel of a vehicle.

**FIG. 4** is a flow chart of a computer-implemented method **400** for reducing undesired rotational speed of at least one wheel **110** of a vehicle **100,** according to an example. The method **400** determines the energy required to counteract the rotational speed caused by moment of inertia of one or more powertrain components. The method **400** enables a retardation torque pulse corresponding to the determined energy to be applied to components of the powertrain. In this way, the rotational speed of the at least one vehicle wheel is efficiently reduced, and a faster traction control response and reduced wheel spin are obtained. The method **400** may be implemented by processing circuitry of a computer system (e.g., the processing circuitry **150** of the controller **140,** the processing circuitry **170** of the global controller **160** described in relation to **FIG. 1,** or the processing circuitry **315** of the controller **310** described in relation to **FIG. 3).**

At **402,** a first value of rotational kinetic energy $E_1$ of one or more powertrain components **110, 120, 210, 220, 230, 240, 250, 260, 320** of the vehicle **100** is determined when the at least one wheel **110** is rotating at a current rotational speed $\omega_1$. The rotational kinetic energy may be determined using any known configuration of sensors for determining rotational kinetic energy. In one example, the determination of the first value of rotational kinetic energy $E_1$ is based on the moment of inertia $I_{110}$ and the current rotational speed $\omega_{110}$ of the at least one wheel **110.** In a preferred example, the first value of rotational kinetic energy $E_1$ is determined using equation (1) discussed above.

For increased accuracy, one or more powertrain components **120, 210, 220, 230, 240, 250, 260, 320** in addition to the at least one wheel **110** are included in the determination of $E_1$. In one example, the first value of rotational kinetic energy

$E_1$ is based on a respective moment of inertia $I_i$ and a respective rotational speed $\omega_i$ of each of the powertrain components involved in transferring power from an electrical machine **120, 210, 320** to the at least one wheel **110.** In a powertrain **200** according to **FIG. 2,** each of the powertrain components **110, 120, 210, 220, 230, 240, 250, 260, 320** may be included in the determination of the first value of rotational kinetic energy $E_1$. In a powertrain **300** according to **FIG. 3,** each of the powertrain components **110, 320** may be included in the determination of the first value of rotational kinetic energy $E_1$.

The respective moment of inertia $I_i$ of the powertrain components may be determined using any known method to determine moment of inertia. For example, it may be calculated using equation (2) below.

$$I_i \; = \sum m_i r_i^2 \qquad\qquad (2)$$

Here, $m_i$ represents the mass of each element of a component, and $r_i$ rrepresents the distance from the axis of rotation of each element of a component. The values of moment of inertia may also be derived from CAD models of the powertrain components, based on the geometry and material properties of each component. This may be particularly beneficial for components with a complex geometry where the mass is distributed in a non-uniform manner.

The current rotational speed $\omega_{1i}$ of the one or more powertrain components may be measured using sensor system **180**. The sensor system **180** is communicatively connected to the controllers **140, 160, 310** of the powertrain **200** and the powertrain **300,** and continuously monitors the rotational speed $\omega_{110}$ of the at least one wheel **110** of the vehicle powertrain **200, 300.** When one or more additional powertrain components are included in the determination of $E_1$, the sensor system **180** may monitor each of the rotational speed $\omega_{210}$ of the electric motor **210,** the rotational speed $\omega_{220}$ of the input shaft **220,** the rotational speed $\omega_{230}$ of the gearbox **230,** the rotational speed $\omega_{240}$ of the output shaft **240,** the rotational speed $\omega_{250}$ of the differential **250** and/or the rotational speed $\omega_{260}$ of the axle shaft **260** of powertrain **200,** and the rotational speed $\omega_{120}$ of the electric wheel motor **120** of powertrain **300.**

At **404,** a second value of rotational kinetic energy $E_2$ of the one or more powertrain components **110, 120, 210, 220, 230, 240, 250, 260, 320** is acquired, when the at least one wheel **110** is rotating at a rotational speed $\omega_2$ where the wheel has traction (or is considered to have sufficient traction). The rotational speed $\omega_2$ can be considered as a rotational speed at which the wheel has a desired amount of slip, for example a sufficiently low but non-zero slip. The rotational speed may be estimated by monitoring data from wheel speed sensors and determining the wheel slip ratio, i.e. the difference between the rotational speed of the at least one wheel **110** speed and the actual vehicle speed. When this slip ratio rises too high, there is a risk of wheel spin. An example value of a desired slip may be 2%, although it will be appreciated that the skilled person may select any desired slip value or range based on implementation and operational conditions. This may be implemented by the skilled person using any suitable slip-speed relation or approach known in the art. The rotational speed $\omega_2$ can be considered as a rotational speed where the driven wheel is behaving in the same or similar manner as a free rolling wheel, e.g. the rotational wheel speeds are the same. In some examples, this can be identified when the rotational speed of the driven wheel is within a margin of a modelled or measured rotational speed of a free rolling wheel under the same conditions, for example within $\pm 1\%$. The rotational speed $\omega_2$ where the at least one wheel **110** has traction and/or a desired amount of slip may be considered as a threshold rotational speed. The threshold rotational speed is influenced by the vehicle's torque output, road surface friction, tire characteristics, and vehicle weight distribution, as will be known by the person skilled in the art. The threshold rotational speed may be set lower on slippery surfaces like wet or icy roads and higher on dry, high-friction surfaces.

As the moment of inertia of the respective powertrain components and the threshold rotational speed is known, the second value of rotational kinetic energy $E_2$ may be predetermined, using equation (1) discussed above. In this way, the time needed for complex calculations is reduced. The threshold rotational speed may function as a trigger, such that method steps for reducing undesired rotational speed are performed in response to determining that the current rotational speed is above the threshold rotational speed.

At **406,** an energy difference $\Delta E$ between the first value of rotational kinetic energy $E_1$ and the second value of rotational kinetic energy $E_2$ is determined, i.e. the difference in rotational kinetic energy when the at least one wheel **110** is rotating at the current rotational speed and at the rotational speed $\omega_2$ where the wheel **110** has traction and/or a desired amount of slip. Consequently, the energy difference $\Delta E$ represents the energy required to counteract undesired rotational speed of the at least one wheel **110** and provide traction to the wheel **110.** The energy difference $\Delta E$ may be determined by equation (3) below.

$$\Delta E \; = E_1 \; - \; E_2 \; = \sum_{i=1}^{n} \frac{I_i \left(\omega_{1i}^2 - \omega_{2i}^2\right)}{2} \qquad\qquad (3)$$

Here, $\omega_{1i}$ is the respective rotational speed of the powertrain components at the current rotational speed of the wheel **110,**

$\omega_{2i}$ is the respective rotational speed of the powertrain components at the rotational speed $\omega_2$ of the wheel **110,** and n is the number of components in the powertrain.

**At 408,** a first retardation torque pulse corresponding to the determined energy difference $\Delta E$ is determined. The first retardation torque pulse is a torque applied during a time *t* in a direction opposite to the direction of rotation of the one or more powertrain components. It may be determined according to equation (4) below.

$$\Delta E \ = \ \frac{Tq}{t} \hspace{4cm} (4)$$

As discussed, $\Delta E$ represents the energy required to counteract undesired rotational speed of the at least one wheel **110,** *Tq* is the first retardation torque pulse and *t* is the time during which the retardation torque is applied. By applying the retardation torque as a pulse during a time t, the reduction in rotational wheel speed is performed in a controlled manner.

The time *t* is determined based on a desired frequency and amplitude of the retardation torque pulse. The frequency may be set at a constant value, based on factors such as the motor's response time and the resonant frequency of the powertrain components, to ensure that undesired resonance effects are avoided. Similarly, the amplitude may also be set at a constant value, based on an upper limit to ensure that the applied torque does not exceed structural or operational limits of the powertrain components. Consequently, by knowing the desired frequency and amplitude of the retardation torque pulse along with the energy ($\Delta E$) which needs to be dissipated, the time t can be calculated.

In a powertrain **200** wherein at least two wheels **110a, 110b** are controlled by one electric motor **210,** the first value of rotational kinetic energy $E_1$, the energy difference $\Delta E$, and the first retardation torque pulse are determined for the wheel of the at least two wheels rotating with the highest rotational speed. In a powertrain **300** wherein at each wheel **110** is controlled by a respective electric wheel motor **320,** a first value of rotational kinetic energy $E_1$, an energy difference $\Delta E$, and a corresponding first retardation torque pulse is determined for each wheel rotating with a rotational speed above the threshold rotational speed independently.

At **410,** the controllers **140, 160, 310** cause the determined first retardation torque pulse to be applied to at least one of the one or more powertrain components to reduce the rotational speed of the at least one wheel. According to one example, the first retardation torque pulse is applied to at least one electric motor **120, 210, 320** of the powertrain **200, 300.** Thereby, the at least one electric motor **120, 210, 320** may further be controlled to convert the first retardation torque pulse into electric energy and store it in a battery of the vehicle. According to one example, the first retardation torque pulse is applied with a driveline retarder or any other device that can effectively send negative torque to the wheel of a vehicle powertrain.

In a powertrain **200** wherein at least two wheels **110a, 110b** are controlled by one electric motor **210,** the determined first retardation torque pulse is applied to the electric motor **210** such that the rotational speed of each of the at least two wheels **110a, 110b** is reduced. By provision of the differential **250,** the retardation torque pulse will be split between the at least two wheels **110a, 110b** based on the relative motion between the wheels. In this way, the speed of the wheel of the at least two wheels rotating with the highest rotational speed will be reduced such that the wheel stops spinning, while the speed reduction of the other wheels of the at least two wheels will be minimal. In a powertrain **300** wherein each wheel **110** is controlled by a respective electric wheel motor **320,** the determined first retardation torque pulse is applied to the respective wheel motor **320** such that the rotational speed of each wheel **110** is reduced individually.

In some examples, at **412,** the method further includes determining a second retardation torque pulse to further reduce the rotational wheel speed to the rotational speed $\omega_2$ where the wheel **110** has traction and/or a desired amount of slip, in response to determining that the rotational speed of the at least one wheel **110** is above the rotational speed $\omega_2$ after the first retardation torque pulse has been applied. That is to say, in the case that the first retardation torque pulse does not provide sufficient retardation to provide traction at the wheel **110,** a second retardation torque pulse can be determined and applied. The second retardation torque pulse is determined by updating the first value of rotational kinetic energy $E_1$ to a current value of rotational kinetic energy, when the at least one wheel **110** is rotating at the rotational speed after the first retardation torque pulse has been applied. A new energy difference $\Delta E$ is determined based on the current value of rotational kinetic energy and the second value of rotational kinetic energy $E_2$, and the second retardation torque pulse is determined based on the new energy difference $\Delta E$.

By continuously monitoring the rotational speed of the wheels **110** using sensor system **180,** the retardation torque pulse applied may be incrementally increased as needed. In this way, the system prevents over-braking while effectively managing persistent slip if the first retardation torque pulse was not sufficient to regain traction.

The method **400** enables the energy required to counteract undesired rotational speed of at least one wheel due to moment of inertia of the powertrain components to be determined, and a corresponding retardation torque pulse to be applied to at least one powertrain component, such that the undesired rotational speed is reduced in an efficient way. In this way, faster traction control response and reduced wheel spin is achieved.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

**Example 1:** A computer system (140, 160, 310, 500) for reducing rotational speed of at least one wheel (110) of a vehicle (100), the computer system (140, 160, 310, 500) comprising processing circuitry (150, 170, 315, 502) configured to: determine a first value of rotational kinetic energy ($E_1$) of one or more powertrain components (110, 120, 210, 220, 230, 240, 250, 260, 320) of the vehicle (100), when the at least one wheel (110) is rotating at a current rotational speed ($\omega_1$); acquire a second value of rotational kinetic energy ($E_2$) of the one or more powertrain components (110, 120, 210, 220, 230, 240, 250, 260, 320), when the at least one wheel (110) is rotating at a rotational speed ($\omega_2$) where the wheel (110) has traction and/or a desired amount of slip; determine an energy difference ($\Delta E$) between the first value of rotational kinetic energy ($E_1$) and the second value of rotational kinetic energy ($E_2$); determine a first retardation torque pulse corresponding to the determined energy difference ($\Delta E$); and cause the determined first retardation torque pulse to be applied to at least one of the one or more powertrain components (110, 120, 210, 220, 230, 240, 250, 260, 320) to reduce the rotational speed of the at least one wheel (110).

**Example 2:** The computer system (140, 160, 310, 500) of example 1, wherein the processing circuitry (150, 170, 315, 502) is configured to determine the first value of rotational kinetic energy ($E_1$) based on a respective moment of inertia ($I_i$) of the one or more powertrain components (110, 120, 210, 220, 230, 240, 250, 260, 320) and a respective current rotational speed ($\omega_{1i}$) of the one or more powertrain components (110, 120, 210, 220, 230, 240, 250, 260, 320).

**Example 3:** The computer system (140, 160, 310, 500) of example 1 or 2, wherein the second value of rotational kinetic energy ($E_2$) is pre-determined based on a respective moment of moment of inertia ($I_i$) of the one or more powertrain components (110, 120, 210, 220, 230, 240, 250, 260, 320) and a respective rotational speed ($\omega_{2i}$) of the one or more powertrain components, when the at least one wheel (110) has traction and/or the desired amount of slip.

**Example 4:** The computer system (140, 160, 310, 500) of any preceding example, wherein the first retardation torque pulse is a torque applied during a time $t$ in a direction opposite to the direction of rotation of the one or more powertrain components (110, 120, 210, 220, 230, 240, 250, 260, 320).

**Example 5:** The computer system (140, 160, 310, 500) of any preceding example, wherein the processing circuitry (150, 170, 315, 502) is configured to cause the first retardation torque pulse to be applied to at least one electric motor (120, 210, 320) of the vehicle powertrain components (110, 120, 210, 220, 230, 240, 250, 260, 320).

**Example 6:** The computer system (140, 160, 310, 500) of example 5, wherein the processing circuitry (150, 170, 315, 502) is further configured to control the at least one electric motor (120, 210, 320) to convert the retardation torque pulse into electric energy and store the electric energy in a battery of the vehicle (100).

**Example 7:** The computer system (140, 160, 310, 500) of example 5-6, wherein at least two wheels (110a, 110b) of the vehicle (100) are controlled by one electric motor (210) and the processing circuitry (150, 170, 315, 502) is configured to determine the first value of rotational kinetic energy ($E_1$) for a wheel of the at least two wheels (110a, 110b) rotating with the highest rotational speed and to cause the determined first retardation torque pulse to be applied to the electric motor (210) such that the rotational speed of each of the at least two wheels (110a, 110b) is reduced.

**Example 8:** The computer system (140, 160, 310, 500) of example 7, wherein the first and second value of rotational kinetic energy each further comprises the rotational kinetic energy of one or more of the one electric motor (210), an input shaft (220), a gearbox (230), an output shaft (240), a differential (250), and an axle shaft (260).

**Example 9:** The computer system (140, 160, 310, 500) of example 5 or 6, wherein each wheel (110) of the vehicle (100) is controlled by a respective electric wheel motor (320) and the processing circuitry (150, 170, 315, 502) is configured to determine a respective first value of rotational kinetic energy ($E_1$) for each wheel (110), determine a respective energy difference ($\Delta E$) between the first value of rotational kinetic energy ($E_1$) and the second value of rotational kinetic energy ($E_2$); determine a respective first retardation torque pulse corresponding to the determined respective energy difference ($\Delta E$); and cause a respective first retardation torque pulse to be applied to the respective wheel motor (320) such that the rotational speed of each wheel (110) is reduced individually.

**Example 10:** The computer system (140, 160, 310, 500) of example 9, wherein the first and second value of rotational kinetic energy each further comprises the rotational kinetic energy of the corresponding electric wheel motor (320).

**Example 11:** The computer system (140, 160, 310, 500) of any preceding example, wherein the processing circuitry (150, 170, 315, 502) is configured to determine the first retardation torque pulse in response to determining that the current rotational speed ($\omega_1$) is above the rotational speed ($\omega_2$) where the wheel (110) has traction and/or the desired amount of slip.

**Example 12:** The computer system (140, 160, 310, 500) of example 11, wherein the processing circuitry (150, 170, 315, 502) is further configured to determine a second retardation torque pulse to further reduce the wheel speed to the rotational speed ($\omega_2$) where the wheel (110) has traction and/or the desired amount of slip, in response to determining that the rotational speed of the at least one wheel (110) is above the rotational speed ($\omega_2$) where the wheel (110) has traction and/or the desired amount of slip after the first retardation torque pulse has been applied.

**Example 13:** A vehicle (100) comprising the computer system (140, 160, 310, 500) of any preceding example.

**Example 14:** A computer implemented method (400) for reducing rotational speed of at least one wheel (110) of a vehicle (100), the method (400) comprising: determining (402), by processing circuitry (150, 170, 315, 502) of a computer system (140, 160, 310, 500), a first value of rotational kinetic energy ($E_1$) of one or more powertrain components (110, 120, 210, 220, 230, 240, 250, 260, 320) of the vehicle (100) when the at least one wheel (110) is rotating at a current rotational speed ($\omega_1$); acquiring (404), by the processing circuitry (150, 170, 315, 502), a second value of rotational kinetic energy ($E_2$) of the one or more powertrain components (110, 120, 210, 220, 230, 240, 250, 260, 320), when the at least one wheel (110) is rotating at a rotational speed ($\omega_2$) where the wheel (110) has traction and/or a desired amount of slip; determining (406), by the processing circuitry (150, 170, 315, 502), an energy difference ($\Delta E$) between the first value of rotational kinetic energy ($E_1$) and the second value of rotational kinetic energy ($E_2$); determining (408), by the processing circuitry (150, 170, 315, 502) a first retardation torque pulse corresponding to the determined energy difference ($\Delta E$); and causing (410), by the processing circuitry (150, 170, 315, 502), the determined first retardation torque pulse to be applied to at least one of the one or more powertrain components (110, 120, 210, 220, 230, 240, 250, 260, 320) to reduce the rotational speed of the at least one wheel (110).

**Example 15:** The computer implemented method (400) of example 14, wherein the method comprises determining, by the processing circuitry (150, 170, 315, 502), the first value of rotational kinetic energy ($E_1$) based on a respective moment of inertia ($I_i$) of the one or more powertrain components (110, 120, 210, 220, 230, 240, 250, 260, 320) and a respective current rotational speed ($\omega_{1i}$) of the one or more powertrain components (110, 120, 210, 220, 230, 240, 250, 260, 320).

**Example 16:** The computer implemented method (400) of example 14 or 15, wherein the method comprises pre-determining, by the processing circuitry (150, 170, 315, 502), the second value of rotational kinetic energy ($E_2$) based on a respective moment of inertia ($I_i$) of the one or more powertrain components (110, 120, 210, 220, 230, 240, 250, 260, 320) and a respective rotational speed ($\omega_{2i}$) of the one or more powertrain components (110, 120, 210, 220, 230, 240, 250, 260, 320), when the at least one wheel (110) has traction and/or the desired amount of slip.

**Example 17:** The computer implemented method (400) of any of examples 14 to 16, wherein the method comprises applying, by the processing circuitry (150, 170, 315, 502), the first retardation torque pulse during a time $t$ in a direction opposite to the direction of rotation of the one or more powertrain components (110, 120, 210, 220, 230, 240, 250, 260, 320).

**Example 18:** The computer implemented method (400) of any of examples 14 to 17, wherein the method comprises causing, by the processing circuitry (150, 170, 315, 502), the first retardation torque pulse to be applied to at least one electric motor (120, 210, 320) of the vehicle powertrain components (110, 120, 210, 220, 230, 240, 250, 260, 320).

**Example 19:** The computer implemented method (400) of example 18, wherein the method further comprises controlling, by the processing circuitry (150, 170, 315, 502), the at least one electric motor (120, 210, 320) to convert the retardation torque pulse into electric energy and store the electric energy in a battery of the vehicle (100).

**Example 20:** The computer implemented method (400) of example 18 or 19, wherein at least two wheels (110a, 110b) of the vehicle (100) are controlled by one electric motor (210), and the method comprises determining, by the processing circuitry (150, 170, 315, 502), the first value of rotational kinetic energy ($E_1$) for a wheel of the at least two wheels (110a, 110b) rotating with the highest rotational speed, and causing, by the processing circuitry (150, 170, 315, 502), the determined first retardation torque pulse to be applied to the electric motor (210) such that the rotational speed of each of the at least two wheels (110a, 110b) is reduced.

**Example 21:** The computer implemented method (400) of example 20, wherein the first and second value of rotational kinetic energy each further comprises the rotational kinetic energy of one or more of the one electric motor (210), an input shaft (220), a gearbox (230), an output shaft (240), a differential (250), and an axle shaft (260).

**Example 22:** The computer implemented method (400) of example 18 or 19, wherein each wheel (110) of the vehicle (100) is controlled by a respective electric wheel motor (320) and the method comprises determining, by the processing circuitry (150, 170, 315, 502), a respective first value of rotational kinetic energy ($E_1$) for each wheel (110), a respective energy difference ($\Delta E$) between the first value of rotational kinetic energy ($E_1$) and the second value of rotational kinetic energy ($E_2$); a respective first retardation torque pulse corresponding to the determined respective energy difference ($\Delta E$); and causing, by the processing circuitry (150, 170, 315, 502), a respective first retardation pulse to be applied to the respective wheel motor (320) such that the rotational speed of each wheel (110) is reduced individually.

**Example 23:** The computer implemented method (400) of example 22, wherein the first and second value of rotational kinetic energy each further comprises the rotational kinetic energy of the corresponding electric wheel motor (320).

**Example 24:** The computer implemented method (400) of any of examples 14 to 23, wherein the method comprises determining, by the processing circuitry (150, 170, 315, 502), the first retardation torque pulse in response to determining that the current rotational speed ($\omega_1$) is above the rotational speed ($\omega_2$) where the wheel (110) has traction and/or the desired amount of slip.

**Example 25:** The computer implemented method (400) of example 24, wherein the method comprises determining, by the processing circuitry (150, 170, 315, 502), a second retardation torque pulse to further reduce the wheel speed to the rotational speed ($\omega_2$) where the wheel (110) has traction and/or the desired amount of slip, in response to determining that the rotational speed of the at least one wheel (110) is above the rotational speed ($\omega_2$) where the wheel (110) has traction and/or the desired amount of slip after the first retardation torque pulse has been applied.

**Example 26:** A computer program product comprising program code for performing, when executed by processing circuitry (150, 170, 315, 502), the computer-implemented method (400) of any of examples 14 to 25.

**Example 27:** A non-transitory computer-readable storage medium comprising instructions, which when executed by processing circuitry (150, 170, 315, 502), cause the processing circuitry to perform the computer-implemented method (400) of any of examples 14 to 25.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.   A computer system (140, 160, 310, 500) for reducing rotational speed of at least one wheel (110) of a vehicle (100), the computer system (140, 160, 310, 500) comprising processing circuitry (150, 170, 315, 502) configured to:

determine a first value of rotational kinetic energy ($E_1$) of one or more powertrain components (110, 120, 210, 220, 230, 240, 250, 260, 320) of the vehicle (100) when the at least one wheel (110) is rotating at a current rotational speed ($\omega_1$);

acquire a second value of rotational kinetic energy ($E_2$) of the one or more powertrain components (110, 120, 210, 220, 230, 240, 250, 260, 320) when the at least one wheel (110) is rotating at a rotational speed ($\omega_2$) where the wheel (110) has a desired amount of slip;

determine an energy difference ($\Delta E$) between the first value of rotational kinetic energy ($E_1$) and the second value of rotational kinetic energy ($E_2$);

determine a first retardation torque pulse corresponding to the determined energy difference ($\Delta E$); and

cause the determined first retardation torque pulse to be applied to at least one of the one or more powertrain components (110, 120, 210, 220, 230, 240, 250, 260, 320) to reduce the rotational speed of the at least one wheel (110).

2. The computer system (140, 160, 310, 500) of claim 1, wherein the processing circuitry (150, 170, 315, 502) is configured to determine the first value of rotational kinetic energy ($E_1$) based on a respective moment of inertia ($I_i$) of the one or more powertrain components (110, 120, 210, 220, 230, 240, 250, 260, 320) and a respective current rotational speed ($\omega_{1i}$) of the one or more powertrain components (110, 120, 210, 220, 230, 240, 250, 260, 320).

3. The computer system (140, 160, 310, 500) of any preceding claim, wherein the second value of rotational kinetic energy ($E_2$) is pre-determined based on a respective moment of inertia ($I_i$) of the one or more powertrain components (110, 120, 210, 220, 230, 240, 250, 260, 320) and a respective rotational speed of the one or more powertrain components (110, 120, 210, 220, 230, 240, 250, 260, 320) when the at least one wheel (110) has the desired amount of slip.

4. The computer system (140, 160, 310, 500) of any preceding claim, wherein the first retardation torque pulse is a torque applied during a time t in a direction opposite to the direction of rotation of the one or more powertrain components (110, 120, 210, 220, 230, 240, 250, 260, 320).

5. The computer system (140, 160, 310, 500) of any preceding claim, wherein the processing circuitry (150, 170, 315, 502) is configured to cause the first retardation torque pulse to be applied to at least one electric motor (120, 210, 320) of the vehicle powertrain components (110, 120, 210, 220, 230, 240, 250, 260, 320).

6. The computer system (140, 160, 310, 500) of claim 5, wherein the processing circuitry (150, 170, 315, 502) is further configured to control the at least one electric motor (120, 210, 320) to convert the retardation torque pulse into electric energy and store the electric energy in a battery of the vehicle (100).

7. The computer system (140, 160, 310, 500) of claim 5 or 6, wherein at least two wheels (110a, 110b) of the vehicle (100) are controlled by one electric motor (210) and the processing circuitry (150, 170, 315, 502) is configured to:

determine the first value of rotational kinetic energy ($E_1$) for a wheel of the at least two wheels (110a, 110b) rotating with the highest rotational speed; and

cause the determined first retardation torque pulse to be applied to the electric motor (210) such that the rotational speed of each of the at least two wheels (110a, 110b) is reduced.

8. The computer system (140, 160, 310, 500) of claim 7, wherein the first and second value of rotational kinetic energy each further comprises the rotational kinetic energy of one or more of the one electric motor (210), an input shaft (220), a gearbox (230), an output shaft (240), a differential (250), and an axle shaft (260).

9. The computer system (140, 160, 310, 500) of claim 5 or 6, wherein each wheel (110) of the vehicle (100) is controlled by a respective electric wheel motor (320) and the processing circuitry (150, 170, 315, 502) is configured to:

determine a respective first value of rotational kinetic energy ($E_1$) for each wheel (110);

determine a respective energy difference ($\Delta E$) between each first value of rotational kinetic energy ($E_1$) and the second value of rotational kinetic energy ($E_2$);

determine a respective first retardation torque pulse corresponding to each determined respective energy difference ($\Delta E$); and

cause a respective first retardation pulse to be applied to each respective wheel motor (320) such that the rotational speed of each wheel (110) is reduced individually.

10. The computer system (140, 160, 310, 500) of any preceding claim, wherein the processing circuitry (150, 170, 315, 502) is configured to determine the first retardation torque pulse in response to determining that the current rotational speed ($\omega_1$) is above the rotational speed ($\omega_2$) where the wheel (110) has the desired amount of slip.

11. The computer system (140, 160, 310, 500) of claim 10 wherein the processing circuitry (150, 170, 315, 502) is further configured to determine a second retardation torque pulse to further reduce the wheel speed to the rotational speed ($\omega_2$) where the wheel (110) has the desired amount of slip, in response to determining that the rotational speed of the at least one wheel (110) is above the rotational speed ($\omega_2$) where the wheel (110) has the desired amount of slip after the first retardation torque pulse has been applied.

12. A vehicle (100) comprising the computer system (140, 160, 310, 500) of any preceding claim.

13. A computer-implemented method (400) for reducing rotational speed of at least one wheel (110) of a vehicle (100), the method (400) comprising:

   determining (402), by processing circuitry (150, 170, 315, 502) of a computer system (140, 160, 310, 500), a first value of rotational kinetic energy ($E_1$) of one or more powertrain components (110, 120, 210, 220, 230, 240, 250, 260, 320) of the vehicle (100) when the at least one wheel (110) is rotating at a current rotational speed ($\omega_1$);
   acquiring (404), by the processing circuitry (150, 170, 315, 502), a second value of rotational kinetic energy ($E_2$) of the one or more powertrain components (110, 120, 210, 220, 230, 240, 250, 260, 320) when the at least one wheel (110) is rotating at a rotational speed ($\omega_2$) where the wheel (110) has a desired amount of slip;
   determining (406), by the processing circuitry (150, 170, 315, 502), an energy difference ($\Delta E$) between the first value of rotational kinetic energy ($E_1$) and the second value of rotational kinetic energy ($E_2$);
   determining (408), by the processing circuitry (150, 170, 315, 502), a first retardation torque pulse corresponding to the determined energy difference ($\Delta E$); and
   causing (410), by the processing circuitry (150, 170, 315, 502), the determined first retardation torque pulse to be applied to at least one of the one or more powertrain components (110, 120, 210, 220, 230, 240, 250, 260, 320) to reduce the rotational speed of the at least one wheel (110).

14. A computer program product comprising program code for performing, when executed by processing circuitry (150, 170, 315, 502), the computer-implemented method (400) of claim 13.

15. A non-transitory computer-readable storage medium comprising instructions, which when executed by processing circuitry (150, 170, 315, 502), cause the processing circuitry to perform the computer-implemented method (400) of claim 13.

**FIG. 1**

200

210

$\omega_{210}$ & $I_{210}$

220

$\omega_{220}$ & $I_{220}$

230

240

$\omega_{110a}$ & $I_{110a}$

$\omega_{240}$ & $I_{240}$

$\omega_{110b}$ & $I_{110b}$

$\omega_{260a}$ & $I_{260a}$

$\omega_{260b}$ & $I_{260b}$

260a

250

260b

110a

110b

**FIG. 2**

300

180

160

170

310

315

$\omega_{110}$ & $I_{110}$

320

110

$\omega_{120}$ & $I_{120}$

**FIG. 3**

400

| Determine a first value of rotational kinetic energy of one or more powertrain components | 402 |

| Acquire a second value of rotational kinetic energy of one or more powertrain components | 404 |

| Determine an energy difference between the first and second value of rotational kinetic energy | 406 |

| Determine a first retardation torque pulse corresponding to the energy difference | 408 |

| Cause the first retardation torque pulse to be applied to powertrain components | 410 |

| Determine a second retardation torque pulse | 412 |

**FIG. 4**

**FIG. 5**

**EUROPEAN SEARCH REPORT**

Application Number

EP 26 15 1281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2020 119552 A1 (AUDI AG [DE]) 27 January 2022 (2022-01-27) * paragraphs [0012], [0016], [0025], [0038], [0044], [0048]; claim 1 * ----- | 1-15 | INV. B60W10/08 B60W30/18 |
| A | US 2022/315004 A1 (BENSCH UWE [DE] ET AL) 6 October 2022 (2022-10-06) * paragraphs [0022], [0046]; claims 1,10; figure 3 * ----- | 1-15 | |
| A | US 2023/021794 A1 (KAISER GERD [DE] ET AL) 26 January 2023 (2023-01-26) * paragraphs [0018], [0019], [0021], [0030], [0037]; claims 11,12,16 * ----- | 1-15 | |

**TECHNICAL FIELDS SEARCHED (IPC)**

B60W

The present search report has been drawn up for all claims

| Place of search | Date of completion of the search | Examiner |
|---|---|---|
| Munich | 19 May 2026 | Rameau, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 1281

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2026

| Patent document cited in search report | Publication date | Patent family member(s) | | Publication date |
|---|---|---|---|---|
| DE 102020119552 A1 | 27-01-2022 | NONE | | |
| US 2022315004 A1 | 06-10-2022 | CN | 114787007 A | 22-07-2022 |
| | | DE | 102019135087 A1 | 24-06-2021 |
| | | EP | 4077077 A1 | 26-10-2022 |
| | | US | 2022315004 A1 | 06-10-2022 |
| | | WO | 2021121951 A1 | 24-06-2021 |
| US 2023021794 A1 | 26-01-2023 | CN | 115151438 A | 04-10-2022 |
| | | EP | 4072889 A1 | 19-10-2022 |
| | | JP | 2023505897 A | 13-02-2023 |
| | | US | 2023021794 A1 | 26-01-2023 |
| | | WO | 2021115580 A1 | 17-06-2021 |

EPO FORM P0459

For more details about this annex : see Official Journal of the European Patent Office, No. 12/82